# EUROPÄISCHE PATENTSCHRIFT

(11) **EP 3 927 594 B1**
(45) Veröffentlichungstag und Bekanntmachung des Hinweises auf die Patenterteilung: **03.04.2024**
(21) Anmeldenummer: 20705695.3
(22) Anmeldetag: 17.02.2020
(51) Int. Cl.: B62D 5/04, F16C 27/06, F16H 1/16, F16H 55/24

(54) **HILFSKRAFTLENKUNG FÜR EIN KRAFTFAHRZEUG**
POWER-ASSISTED STEERING SYSTEM FOR A MOTOR VEHICLE
DIRECTION ASSISTÉE POUR UN VÉHICULE À MOTEUR

(30) Priorität: 18.02.2019 DE 102019202142
(43) Veröffentlichungstag der Anmeldung: 29.12.2021
(73) Patentinhaber: thyssenkrupp Presta AG, 9492 Eschen (LI); thyssenkrupp AG, 45143 Essen (DE)
(72) Erfinder: KOHLER, Christian, 8888 Heiligkreuz (CH); VONIER, Felix, 6780 Schruns (AT)
(74) Vertreter: thyssenkrupp Intellectual Property GmbH
(86) Internationale Anmeldenummer: PCT/EP2020/054007
(87) Internationale Veröffentlichungsnummer: WO 2020/169495

(56) Entgegenhaltungen:
- WO-A1-2012/136315
- WO-A1-2019/081368
- DE-A1-102008 042 477
- DE-U1-202017 100 155
- US-A1- 2015 360 719

## Beschreibung

### Stand der Technik

Die Erfindung betrifft eine elektromechanische Hilfskraftlenkung für ein Kraftfahrzeug, umfassend eine um eine von einem elektrischen Motor um eine Antriebsachse drehend antreibbare Schnecke, die mit einem mit einer Lenkwelle gekoppelten Schneckenrad zusammenwirkt, und die um die Antriebsachse drehbar in einem Lager gelagert ist, das in einer relativ zum Schneckenrad verlagerbaren Halterung gehalten ist, wobei die Halterung ein Kernelement aus einem Kernmaterial aufweist, welches mit zumindest einem Kontaktelement aus einem relativ zum Kernmaterial weicheren, elastisch leichter verformbaren Weichmaterial verbunden ist, und ein Kontaktelement einen nach außen von der Halterung vorstehenden Dämpfungskörper ausbildet.

Bei hilfskraftunterstützten Lenkungen von Kraftfahrzeugen wird zusätzlich zum manuellen Lenkmoment, welches vom Fahrer als Lenkbefehl über das eingangsseitig angebrachte Lenkrad in die Lenkwelle eingebracht wird, ein zusätzliches Hilfsmoment in den Lenkstrang eingekoppelt, um das manuelle Lenkmoment für einen Lenkeinschlag der Räder zu unterstützen.

In einer gattungsgemäßen elektromechanischen Hilfskraftlenkung wird das manuelle Lenkmoment mittels eines Drehmomentsensors erfasst, beispielsweise durch Messung der relativen Torsion eines zwischen einer Eingangs- und einer Ausgangswelle der Lenkwelle eingegliederten Drehstabs. Abhängig von dem gemessenen Lenkmoment wird in einer elektrischen Steuereinheit die erforderliche Hilfskraftunterstützung bestimmt, und ein elektrischer Stellantrieb entsprechend angesteuert. Der Stellantrieb weist einen Elektromotor zur Erzeugung eines Hilfsmoments auf, welches in die Lenkwelle eingekoppelt wird.

Gattungsgemäß wird das Hilfsmoment über ein Schneckengetriebe eingekoppelt, welches eine mit der Motorwelle des Elektromotors gekuppelte, in ein Schneckenrad eingreifende Schnecke aufweist, die von dem Motor um ihre Antriebsachse, dies ist die Schneckenachse, drehend antreibbar ist. Das Schneckenrad ist mit der Lenkwelle gekoppelt, beispielsweise mit der Ausgangswelle, die mit dem Lenkritzel eines Lenkgetriebes verbunden sein kann, in dem das Lenkritzel in eine Zahnstange eingreift, welche eine Drehung der Lenkwelle in eine translatorische Bewegung von Spurstangen und dadurch in einen Lenkausschlag der gelenkten Räder umsetzt.

Um die Laufruhe zur erhöhen, und Geräuschbildung bei den durch die Lenkbewegungen verursachten Lastwechseln möglichst zu vermeiden, ist es bekannt, die Schnecke in Richtung des Verzahnungseingriffs in Richtung gegen das Schneckenrad elastisch vorzuspannen. Eine derartige Anordnung ist im Stand der Technik beispielsweise in der DE 10 2014 110 306 A1 beschrieben. Darin ist die Schnecke an ihrem motorfernen Ende in einem Lager drehbar gelagert, welches in einer Halterung aufgenommen ist, in der ein zur Antriebsachse koaxialer Lagerring, der einen Außenteil des Lagers bildet, drehfest angebracht ist. Die Halterung ist verlagerbar in einem Getriebegehäuse des Schneckengetriebes angebracht, so dass der Lagerring und damit die Schnecke in Richtung gegen die Verzahnung des Schneckenrads bewegbar ist und in einen spielfreien Verzahnungseingriff mit dem Schneckenrad vorgespannt werden kann. Als Vorspannelement kann beispielsweise eine Feder vorgesehen sein, welche an der Halterung angreift und die Schnecke spielfrei gegen die Verzahnung des Schneckenrads andrückt.

Aus der genannten DE 10 2014 110 306 A1 ist es bekannt, die Halterung als Schwenk- oder Exzenterhebel auszubilden, der um eine zur Antriebsachse beabstandete Schwenkachse verschwenkbar in einem Getriebegehäuse des Schneckengetriebes drehbar gelagert ist. Durch Antriebsvibrationen, die über das Lager auf die Halterung übertragen werden, und dadurch, dass die Halterung bei Lastwechseln gegen das Getriebegehäuse anschlägt, können unerwünschte Betriebsgeräusche auftreten, welche die Laufruhe beeinträchtigen.

Aus der DE 20 2017 100 155 U1 ist es bekannt, außen an der Halterung ein Kontaktelement aus einem relativ zum Kernmaterial elastisch leichter verformbaren Weichmaterial als Dämpfungskörper anzubringen. Es können dennoch störende Betriebsgeräusche auftreten.

Angesichts der vorangehend erläuterten Problematik ist es eine Aufgabe der vorliegenden Erfindung, eine verbesserte Lenkung mit verringerter Geräuschentwicklung anzugeben.

### Darstellung der Erfindung

Diese Aufgabe wird erfindungsgemäß gelöst durch Hilfskraftlenkung mit den Merkmalen des Anspruchs 1. Vorteilhafte Weiterbildungen ergeben sich aus den Unteransprüchen.

Bei einer elektromechanischen Hilfskraftlenkung für ein Kraftfahrzeug, umfassend eine um eine von einem elektrischen Motor um eine Antriebsachse drehend antreibbare Schnecke, die mit einem mit einer Lenkwelle gekoppelten Schneckenrad in Eingriff steht, und die um die Antriebsachse drehbar in einem Lager gelagert ist, das in einer relativ zum Schneckenrad verlagerbaren Halterung gehalten ist, wobei die Halterung ein Kernelement aus einem Kernmaterial aufweist, welches mit zumindest einem Kontaktelement aus einem relativ zum Kernmaterial weicheren, elastisch leichter verformbaren Weichmaterial verbunden ist, und ein Kontaktelement einen nach außen von der Halterung vorstehenden Dämpfungskörper ausbildet, ist erfindungsgemäß vorgesehen, dass das Lager einen Lagerring aufweist, der in der Halterung in einer Lageraufnahme angebracht ist, und ein in der Lageraufnahme angeordnetes Kontaktelement kontaktiert.

Die Erfindung sieht vor, dass das Lager einen Lagerring aufweist, der in der Halterung in einer Lageraufnahme angebracht ist, und ein in der Lageraufnahme angeordnetes Kontaktelement kontaktiert. Das Lager kann beispielsweise ein Wälzlager sein, wobei in dem äußeren Lagerring ein Lagerinnenring über Wälzkörper drehbar gelagert ist. Die Lageraufnahme kann bevorzugt als zur Antriebsachse koaxiale Lageraufnahme-Öffnung ausgebildet sein, die an ihrem den Lagerring tragenden Innenumfang zumindest ein Kontaktelement aufweist, welches gegen den Lagerring anliegt. Das Kontaktelement kann bevorzugt den Lagerring durchgehend oder zumindest abschnittweise umschließen, so dass der Lagerring nicht in direktem Kontakt mit dem Kernelement kommt. Dadurch kann die Übertragung von mechanischen Störungen vom Lager auf die Halterung durch Antriebsvibrationen oder Lastwechsel von dem Weichmaterial gedämpft werden. Ein weiterer Vorteil ist, dass durch das nachgiebige Weichmaterial Maßtoleranzen zwischen Lager und Lageraufnahme ausgeglichen werden können, wodurch der Fertigungs- und Montageaufwand verringert werden können.

Die erfindungsgemäße Halterung weist als Kernelement eine im Wesentlichen starre und formsteife Trägerstruktur auf, die aus einer formsteifen Hartkomponente gebildet, beispielsweise aus einem relativ festen und unter den auftretenden Betriebsbelastungen möglichst nicht oder nur geringfügig verformten Kernmaterial, beispielsweise einem Gusswerkstoff oder einem im Kunststoff-Spritzguss verarbeitbaren thermoplastischen Polymer, beispielsweise glasfaserverstärktes Polyamid (PA) , bevorzugt mit einer definierten Härte von , die im Folgenden auch kurz Kernhärte genannt wird. Erfindungsgemäß ist das Kernelement zumindest seiner Oberfläche, der sogenannten Kernoberfläche, in funktional spezifizierten Kontaktbereichen mit mindestens einem Kontaktelement aus einem relativ zum Kernmaterial weicheren Weichmaterial verbunden. Das Weichmaterial hat beispielsweise eine geringere Shore-Härte, und kann mit Vorteil ein thermoplastisches, gummielastisches Elastomer sein, beispielsweise thermoplastisches Polyurethan (TPU) oder Thermoplastisch Polyolefine Vulkanisate (TPV).

Ein oder mehrere Kontaktelemente können außen an der Halterung in zumindest einem Kontaktbereich angeordnet sein, der im Betrieb in mechanischen Kontakt mit anderen Komponenten der Hilfskraftlenkung kommen kann, beispielsweise einem Lager oder Gehäuseteil des Getriebegehäuses. Im Betrieb von außen auf die Halterung einwirkende mechanische Störungen, beispielsweise Antriebsvibrationen oder mechanische Impulse, treffen dadurch auf ein Kontaktelement, welches infolge dessen elastisch verformt wird, und dabei durch innere Reibung des Weichmaterials mechanische Energie absorbiert. Daraus resultiert der Vorteil, dass mechanische Störungen durch Vibrationen und dergleichen gedämpft werden und nicht oder nur abgeschwächt auf das Kernelement übertragen werden. Dadurch wird die Geräuschentwicklung verringert.

Dadurch, dass das Kernelement zumindest abschnittweise mit Weichmaterial bedeckt oder umschlossen ist, können auch resonante Schwingungen der Halterung gedämpft werden, was ebenfalls einen positiven Effekt bezüglich einer geringeren Geräuschentwicklung bewirkt.

Außerdem kann durch das Weichmaterial auch die Übertragung von Vibrationen und mechanischen Impulsen von der Halterung auf andere Teile der Hilfskraftlenkung, beispielsweise Gehäuseteile des Getriebegehäuses, Vorspannvorrichtungen oder dergleichen dadurch wirksam reduziert werden, dass ein Kontaktelement in einem Kontaktbereich an der Kernoberfläche positioniert ist, wo mechanischer Kontakt zwischen der Halterung und der Hilfskraftlenkung auftreten kann. Dadurch werden unerwünschte Störgeräusche ebenfalls verringert.

Bevorzugt ist das Kernmaterial ein thermoplastisches Polymer (TP) und das Weichmaterial ein thermoplastisches Elastomer (TPE). Dadurch wird in vorteilhafter Weise ermöglicht, dass die Halterung als Zweikomponenten-Spritzgussteil ausgebildet ist, bei dem das Kernelement und mindestens ein Kontaktelement im Zweikomponenten-Kunststoffspritzgussverfahren verbunden sind. Das Kernelement kann dabei in einem ersten Schritt aus einem Polymer gespritzt werden, welches in einem weiteren Schritt zumindest bereichsweise mit dem Weichmaterial umspritzt wird. Dadurch wird eine rationelle Fertigung ermöglicht, bei der Form, Anordnung und Abmessungen des Kontaktelements optimal gestaltet werden können. Dabei kann eine dauerhaft haltbare, stoffschlüssige und gegebenenfalls zusätzlich formschlüssige Verbindung zwischen Kern- und Weichmaterial erzeugt werden.

Es kann vorgesehen sein, dass die Lageraufnahme mindestens ein mit dem Kernelement einstückig ausgebildetes Stützelement aufweist. Ein Stützelement kann beispielsweise einen zahn- oder rippenartigen Vorsprung umfassen, der in der Lageraufnahme-Öffnung radial nach innen vorsteht. Bevorzugt können mehrere Stützelemente über den Umfang verteilt angeordnet sein, so dass das Kernelement eine Art innen verzahnte Struktur hat. Das oder die Stützelemente stützen und positionieren das Lager in der Lageraufnahme. Das oder die Stützelemente sind einstückig mit dem Kernelement bevorzugt in Guss- oder Spritzgussverfahren gefertigt, und von dem Weichmaterial umgeben, wobei das dadurch gebildete Kontaktelement zumindest im Umfangsbereich zwischen dem oder den Stützelementen radial nach innen vorsteht. Ein Vorteil ist, dass das Weichmaterial in dem radial zurückspringenden Bereich außerhalb des oder der Stützelemente eine größere radiale Abmessung haben kann, wodurch sich eine größere Dämpfungswirkung ergibt. Außerdem bildet das mit dem oder den Stützelementen verzahnte Kontaktelement einen in Umfangsrichtung wirksamen Formschluss, wodurch die Belastbarkeit der Verbindung erhöht wird.

Als Weiterbildung ist es auch denkbar und möglich, dass der Lagerring mit dem Weichmaterial stoffschlüssig verbunden ist, beispielsweise durch Umspritzen, oder auch durch Verschweißen oder Verkleben.

Die Schnecke, das Schneckenrad und die Halterung sind bevorzugt in einem Getriebegehäuse angeordnet und gelagert. Die Halterung ist zusammen mit dem darin aufgenommenen Lager der Schnecke in dem Getriebegehäuse relativ dazu bewegbar gelagert.

Es kann vorgesehen sein, dass ein Kontaktelement einen nach außen von der Halterung vorstehenden Dämpfungskörper ausbildet. Der Dämpfungskörper kann bevorzugt von der Halterung im Bereich der Lageraufnahme bezüglich der Antriebsachse radial nach außen vorstehend angeordnet sein und dort einen Anschlagdämpfer bilden. Wenn sich die Schnecke bei Lastwechseln vom Schneckenrad weg bewegt, kann die Halterung innen mit dem Dämpfungskörper an dem Getriebegehäuse anschlagen, wobei der Anschlag durch das Weichmaterial des Dämpfungskörpers abgefedert und gedämpft wird. Dadurch wird die Geräuschentwicklung reduziert.

Der Dämpfungskörper kann in einer nach außen hin offenen Ausnehmung des Kernelements angebracht sein. Die Ausnehmung kann als Vertiefung oder Öffnung ausgebildet sein, die von außen in das Kernelement bezüglich der Antriebsachse radial nach innen gerichtet eingebracht ist. Die in Richtung des Anschlags zur Dämpfung wirksame Materialstärke des Weichmaterials kann dann durch die von außen gemessene Tiefe der Ausnehmung vorgegeben werden.

Es kann vorgesehen sein, dass der Dämpfungskörper aus der Ausnehmung nach außen konvex gewölbt vorsteht. Der Dämpfungskörper erhält eine nach außen verjüngt zulaufende Form, beispielsweise kalottenförmig. Dadurch kommt er beim Anschlag zunächst mit einer kleinen Kontaktfläche mit der Gegenfläche am Gehäuse in Kontakt, und wird bei einer größeren Auslenkung progressiv weiter gestaucht. Auf diese Weise kann durch Gestaltung der konvexen Form eine Feder- und Dämpfungscharakteristik angepasst vorgegeben werden.

Eine vorteilhafte Weiterbildung ist, dass die Ausnehmung bis in die Lageraufnahme durchgeht, wobei ein Kontaktelement der Lageraufnahme und ein Dämpfungselement durch die Ausnehmung einstückig miteinander verbunden sind. In dieser Ausführung bildet die Ausnehmung eine im Kernelement von außen quer, d.h. im Wesentlichen radial bezüglich der Antriebs- bzw. Schneckenachse bis zur Lageraufnahme durchgehende, kanalartige Öffnung. Die Öffnung ist bevorzugt als Bohrung ausgebildet, die radial von außen in die Innenwandung der Lageraufnahme-Öffnung einmündet. Das Weichmaterial des in der Ausnehmung angeordneten Dämpfungselements erstreckt sich durch diese Bohrung und ist dabei einstückig mit dem in der Lageraufnahme angeordneten Kontaktelement verbunden. Mit anderen Worten wird ein einstückiger, durchgehender Weichmaterialkörper ausgebildet, welcher das nach außen vorstehende Dämpfungselement des Anschlagdämpfers, und auch das in der Lageraufnahme das Lager aufnehmende Kontaktelement aufweist. Ein Vorteil dabei ist, dass für das Dämpfungselement aufgrund der großen Tiefe der durchgehenden Ausnehmung eine verbesserte und in weiten Grenzen einstellbare Dämpfungswirkung vorgegeben werden kann. Dadurch wird eine nochmals verbesserte Entkopplung der Halterung gegenüber mechanischen Störungen ermöglicht. Ein weiterer Vorteil ist die zusätzliche formschlüssige Verankerung des Dämpfungselements und des Kontaktelements der Lageraufnahme mit der Halterung und untereinander. Fertigungstechnisch ist es weiterhin vorteilhaft, dass das Dämpfungselement und das Kontaktelement beim Zweikomponenten-Spritzguss über einen einzigen Anspritzpunkt ohne zusätzliche Angusskanäle an das Kernelement angespritzt werden können, wodurch die Fertigung vereinfacht wird.

Die Halterung kann als Schwenkhebel bzw. Exzenterhebel ausgebildet sein, der um eine von der Antriebsachse beabstandete Schwenkachse relativ zum Schneckenrad verschwenkbar ist. Die Schwenkachse kann im Wesentlichen parallel zur Antriebsachse angeordnet sein, oder geneigt dazu. Die Schwenklagerung kann einen Achsbolzen umfassen, der fest mit dem Schwenkhebel verbunden ist und in dem Getriebegehäuse drehbar gelagert ist, oder der mit dem Getriebegehäuse drehfest verbunden ist und in dem Schwenkhebel drehbar gelagert ist.

Weiterhin ist es denkbar und möglich, dass sich das Weichmaterial über die Lageraufnahme des Schwenkhebels in Richtung einer Lagerbohrung erstreckt bzw. dort zwischen Rippen oder Vorsprüngen des Kernelements angeordnet und verankert ist. In anderen Worten kann das Weichmaterial auch in einem Bereich zwischen der Lageraufnahme und der Lagerbohrung vorgesehen sein und ebenfalls im Zweikomponenten-Spritzguss mit dem Kernelement verbunden sein. Weiterhin ist es auch denkbar und möglich, dass sich die Weichkomponente bis in die Lagerbohrung des Achsbolzens erstreckt und mit diesem in direktem Kontakt steht.

Um die Schnecke unter Vorspannung in Eingriff mit dem Schneckenrad zu halten, ist es vorteilhaft, dass die Halterung von einem Federelement in Richtung auf das Schneckenrad zu vorgespannt ist. Wenn die Halterung als Schwenkhebelhebel ausgebildet sein, kann eine Druck-, Zug- oder Schenkelfeder derart zwischen dem Getriebegehäuse und dem Schwenkhebel angeordnet sein, dass die Lageraufnahme zusammen mit dem Lager und dem darin gelagerten Ende der Schnecke federnd in den Wirkeingriff mit der Verzahnung angedrückt wird.

Ein Vorspannelement kann alternativ oder zusätzlich einen elastischen Körper umfassen, beispielsweise einen gummielastischen Elastomerkörper, der zwischen dem Getriebegehäuse und einem als Dämpferkörper außen an der Halterung angeordneten Kontaktelement eingesetzt ist. Das Vorspannelement kann dann die Vorspannkraft, mit der die Schnecke gegen das Schneckenrad belastet wird, über das Kontaktelement auf die Halterung, beispielsweise einen Schwenkhebel, ausüben. Durch den Dämpferkörper ist das Vorspannelement mechanisch gegenüber dem Gehäuse gedämpft.

### Beschreibung der Zeichnungen

Vorteilhafte Ausführungsformen der Erfindung werden im Folgenden anhand der Zeichnungen näher erläutert. Im Einzelnen zeigen:
- Figur 1: eine Kraftfahrzeuglenkung in einer schematischen perspektivischen Ansicht,
- Figur 2: ein Getriebe (Lenkunterstützungsgetriebe) einer Kraftfahrzeuglenkung gemäß Figur 1 in einer schematischen perspektivischen Ansicht,
- Figur 3: die Getriebeelemente eines Getriebes gemäß Figur 2 in einer schematischen perspektivischen Ansicht ohne Getriebegehäuse (Gehäuse),
- Figur 3a: eine erfindungsgemäße Halterung eines Getriebes gemäß Figur 2 oder 3 in einer axialen Ansicht in Richtung der Antriebsachse,
- Figur 3b: eine schematische Darstellung der Lagerung der Halterung gemäß Figur 3a in einer ersten Ausführung,
- Figur 3c: eine schematische Darstellung der Lagerung der Halterung gemäß Figur 3a in einer zweiten Ausführung,
- Figur 4: ein erfindungsgemäßer Schwenkhebel der Halterung gemäß Figuren 3 oder 3a in perspektivischer Ansicht mit einem Teilschnitt durch die Halterung,
- Figur 5: der Schwenkhebel gemäß Figur 4 in einer weiteren perspektivischen Ansicht,
- Figur 6: ein Kernelement des Schwenkhebels gemäß Figur 4 oder 5 in einer weiteren perspektivischen Ansicht,
- Figur 7: eine vergrößerte Detailansicht eines Schnitts durch den Schwenkhebel gemäß Figur 4 oder 5 längs der Antriebsachse,
- Figur 8: eine auseinander gezogene Teildarstellung des Getriebes gemäß Figur 3,
- Figur 9: der Schwenkhebel gemäß Figur 4 oder 5 in einer axialen Ansicht in Richtung der Antriebsachse,
- Figur 10: der Schwenkhebel gemäß Figur 9 in einer axialen Ansicht in entgegengesetzter Richtung der Antriebsachse,
- Figur 10a: eine Schnittdarstellung des Schwenkhebels gemäß Figur 9 in entgegengesetzter Richtung der Antriebsachse.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

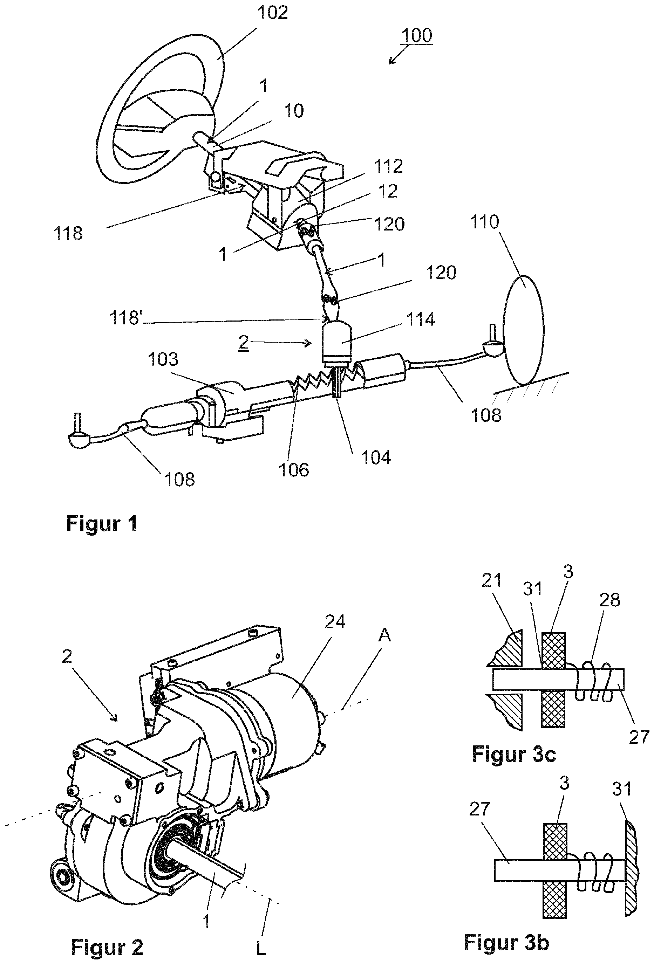

In Figur 1 ist eine als elektromechanische Hilfskraftlenkung ausgebildete Kraftfahrzeuglenkung 100 schematisch dargestellt, wobei ein Fahrer über ein Lenkrad 102 ein Lenk-Drehmoment (Lenkmoment) als Lenkbefehl in eine Lenkwelle 1 einbringen kann. Das Lenkmoment wird über die Lenkwelle 1 auf ein Lenkritzel 104 übertragen, welches mit einer Zahnstange 106 kämmt, die dann ihrerseits über eine Verschiebung der Spurstangen 108 den vorgegebenen Lenkwinkel auf die lenkbaren Räder 110 des Kraftfahrzeugs überträgt.

Eine elektrische Hilfskraftunterstützung kann in Form einer eingangsseitig mit der Lenkwelle 1 gekoppelten Hilfskraftunterstützung 112, einer mit dem Ritzel 104 gekoppelten Hilfskraftunterstützung 114 und/oder einer mit der Zahnstange 106 gekoppelten Hilfskraftunterstützung 116 vorgesehen sein. Die jeweilige Hilfskraftunterstützung 112, 114 oder 116 koppelt ein Hilfsdrehmoment in die Lenkwelle 1 und/oder das Lenkritzel 104 und/oder eine Hilfskraft in die Zahnstange 106 ein, wodurch der Fahrer bei der Lenkarbeit unterstützt wird. Die drei unterschiedlichen, in der Figur 1 dargestellten Hilfskraftunterstützungen 112, 114 und 116 zeigen mögliche Positionen für deren Anordnung.

Üblicherweise ist nur eine einzige der gezeigten Positionen mit einer Hilfskraftunterstützung 112, 114 oder 116 belegt. Das Hilfsdrehmoment bzw. die Hilfskraft, welche zur Unterstützung des Fahrers mittels der jeweiligen Hilfskraftunterstützung 112, 114 oder 116 aufgebracht werden soll, wird unter Berücksichtigung eines von einem Drehmomentsensor 118 ermittelten, vom Fahrer eingebrachten Lenkmoments bestimmt. Alternativ oder in Kombination mit der Einbringung des Hilfsdrehmoments kann von der Hilfskraftunterstützung 112, 114, 116 ein zusätzlicher Lenkwinkel in das Lenksystem eingebracht werden, der sich mit dem vom Fahrer über das Lenkrad 102 aufgebrachten Lenkwinkel summiert.

Die Lenkwelle 1 weist eingangsseitig eine mit dem Lenkrad 102 verbundene Eingangswelle 10 und ausgangsseitig eine mit der Zahnstange 106 über das Lenkritzel 104 verbundene Ausgangswelle 12 auf. Die Eingangswelle 10 und die Ausgangswelle 12 sind drehelastisch über einen in der Figur 1 nicht zu erkennenden Drehstab 119 miteinander gekoppelt. Damit führt ein von einem Fahrer über das Lenkrad 102 in die Eingangswelle 10 eingetragenes Drehmoment immer dann zu einer Relativdrehung der Eingangswelle 10 bezüglich der Ausgangswelle 12, wenn die Ausgangswelle 12 sich nicht exakt synchron zu der Eingangswelle 10 dreht. Diese Relativdrehung zwischen Eingangswelle 10 und Ausgangswelle 12 kann über einen Drehwinkelsensor gemessen werden und entsprechend aufgrund der bekannten Torsionssteifigkeit des Drehstabes ein entsprechendes Eingangsdrehmoment relativ zur Ausgangswelle 12 bestimmt werden. Auf diese Weise wird durch die Bestimmung der Relativdrehung zwischen Eingangswelle 10 und Ausgangswelle 12 der Drehmomentsensor 118 ausgebildet. Ein solcher Drehmomentsensor 118 ist prinzipiell bekannt und kann beispielsweise eine elektromagnetische Sensoranordnung, oder durch eine andere Messung der Relativverdrehung realisiert werden.

Entsprechend wird ein Lenkmoment, welches von dem Fahrer über das Lenkrad 102 auf die Lenkwelle 1 beziehungsweise die Eingangswelle 10 aufgebracht wird, nur dann den Eintrag eines Hilfsdrehmoments durch eine der Hilfskraftunterstützungen 112, 114, 116 bewirken, wenn die Ausgangswelle 12 gegen den Drehwiderstand des Drehstabs relativ zu der Eingangswelle 10 verdreht wird.

Der Drehmomentsensor 118 kann auch alternativ an der Position 118` angeordnet sein, wobei dann die Durchbrechung der Lenkwelle 1 in Eingangswelle 10 und Ausgangswelle 12 und die drehelastische Kopplung über den Drehstab entsprechend an einer anderen Position vorliegt, um aus der Relativverdrehung der über den Drehstab mit der Eingangswelle 10 gekoppelten Ausgangswelle 12 eine Relativdrehung und damit entsprechend ein Eingangsdrehmoment und/oder ein einzubringendes Hilfsdrehmoment bestimmen zu können.

Die Lenkwelle 1 gemäß Figur 1 umfasst weiterhin mindestens ein kardanisches Gelenk 120, mittels welchem der Verlauf der Lenkwelle 1 im Kraftfahrzeug an die räumlichen Gegebenheiten angepasst werden kann.

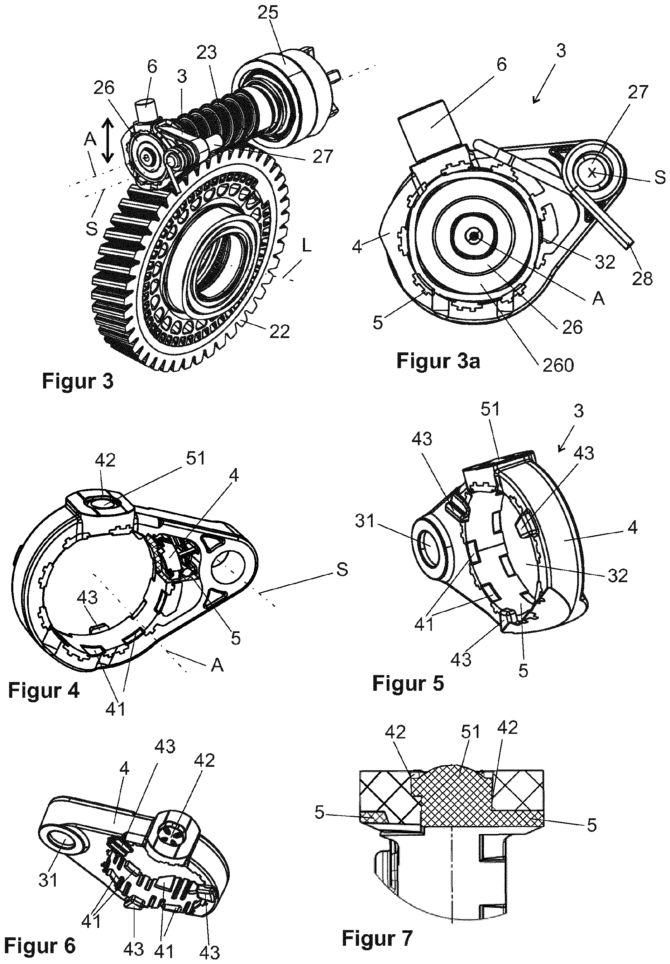

Im dargestellten Beispiel umfasst die Hilfskraftunterstützung 112 oder 114 ein Getriebe 2, welches ein Lenkunterstützungsgetriebe bildet, das Getriebe 2 ist in Figur 2 in einer perspektivischen Ansicht gezeigt, und in Figur 3 in einer schematischen Ansicht, bei welcher zur besseren Übersicht das Getriebegehäuse 21 weggelassen ist und einen Blick in das Innere des Getriebes 2 freigibt.

Das Getriebe weist ein Getriebegehäuse 21 auf, im Folgenden auch kurz als Gehäuse 21 bezeichnet. In dem Gehäuse 21 ist ein drehfest mit der Lenkwelle 1 verbundenes Schneckenrad 22 um die Längsachse L drehbar gelagert. Eine Schnecke 23 steht zur Bildung eines Schneckengetriebes mit dem Schneckenrad 22 in Verzahnungseingriff, und ist von einem an das Gehäuse 21 angeflanschten elektrischen Motor 24 um die Antriebsachse A, die identisch mit der Schneckenachse ist, drehend antreibbar. Wie in Figur 3 erkennbar ist, steht die Antriebsachse A im Wesentlichen senkrecht zur Längsachse L.

An ihrem motornahen Ende - in Figur 3 rechts - ist die Schnecke 23 mit der Motorwelle über eine Kupplung, insbesondere eine Klauenkupplung, des Motors 24 verbunden und um die Antriebsachse A drehbar in einem Lager 25 gelagert. An ihrem motorfernen Ende - in Figur 3 links - ist die Schnecke 23 in einem Lager 26 gelagert. Das Lager 26 ist in einer als Schwenkhebel 3 ausgebildeten Halterung aufgenommen, welche eine Ausgleichsbewegung des Lagers 26 und damit der Schnecke 23 zum Schneckenrad 22 hin und vom Schneckenrad 23 weg ermöglicht, wie in Figur 3 mit dem Doppelpfeil angedeutet. Hierzu ist der Schwenkhebel 3, der in Figur 3a vergrößert in einer axialen Ansicht von der motorfernen Seite in Richtung der Antriebsachse A gezeigt ist, in dem Gehäuse 21 um eine Schwenkachse S verschwenkbar gelagert, die mit Abstand im Wesentlichen parallel zur Antriebsachse A verläuft. Zur Lagerung um die Schwenkachse S ist der Schwenkhebel 3 mit einer Lagerbohrung 31 verdrehbar auf einem vom Gehäuse 21 gehaltenen Achsbolzen 27 gelagert, der als Lagerzapfen dient. Dies ist in Figur 3b schematisch dargestellt. Alternativ kann der Achsbolzen 27 fest in der Lagerbohrung 31 fixiert und in dem Gehäuse 21 drehbar gelagert sein, wie schematisch in Figur 3c dargestellt.

Ein als Schenkelfeder ausgebildetes Federelement 28 ist auf dem Achsbolzen 27 angeordnet und stützt sich mit einem Schenkel am Gehäuse 21 ab, und mit dem anderen Schenkel von außen gegen den Schwenkhebel 3, so dass dieser mit der Federkraft in der Schwenkrichtung um die Schwenkachse S elastisch gegen das Schneckenrad 22 angedrückt wird.

Der Schwenkhebel 3 ist unterschiedlichen Perspektiven in den Figuren 4 und 5 einzeln dargestellt.

Das Lager 26 ist bevorzugt als Wälzlager ausgebildet, und weist einen äußeren Lagerring 260 auf, der drehfest in einer Lageraufnahme 32 in dem Schwenkhebel 3 angebracht ist. Die Lageraufnahme 32 wird durch eine koaxial zur Antriebsachse A durchgehende Lageraufnahme-Öffnung gebildet.

Der Schwenkhebel 3 weist ein Kernelement 4 auf, welches als Kunststoff-Spritzgussteil aus einem thermoplastischen Polymer (TP) ausgebildet ist, welches das Kernmaterial bildet und eine relativ hohe Festigkeit und Formsteifigkeit hat, wie beispielsweise PA 66-GF50. Die Lageraufnahme 32 weist ein über ihre Innenwandung umlaufendes Kontaktelement 5 auf, welches durch ein im Zweikomponenten-Spritzguss mit dem Kernelement 4 verbundenes Weichmaterial gebildet wird, welches bevorzugt ein thermoplastisches Elastomer ist, dass eine geringere Shore-Härte als das Kernmaterial des Kernelements 4 hat und gummielastisch verformbar ist, beispielsweise TPU.

Das Kernelement 4, welches in Figur 6 einzeln ohne das Kontaktelement 5 gezeigt ist, weist radial nach innen in die Lageraufnahme 32 vorspringende Stützelemente 41 auf, die über den Umfang verteilt versetzt angeordnet sind. Die Stützelemente 41 sind zumindest teilweise von dem Weichmaterial des Kontaktelements 5 umgeben, und stehen radial darüber vor, so dass der Lagerring 260 im montierten zustand gemäß Figur 3a ausschließlich oder zumindest überwiegend mit dem Weichmaterial des Kontaktelements 4 verbunden ist. Das Weichmaterial 5 erstreckt sich weiterhin auch in Richtung der Lagerbohrung 31 und kann somit den Bereich zwischen Lageraufnahme 32 und Lagerbohrung 31 zumindest teilweise einnehmen, wie in Figur 4 in der Teilschnittansicht dargestellt ist.

Die Lagerbohrung 31 ist in dem Kernelement 4 ausgebildet. Die Lagerbohrung 31 kann zumindest teilweise, beispielsweise im Eingriffsbereich des Achsbolzens 27, das Weichmaterial umfassen.

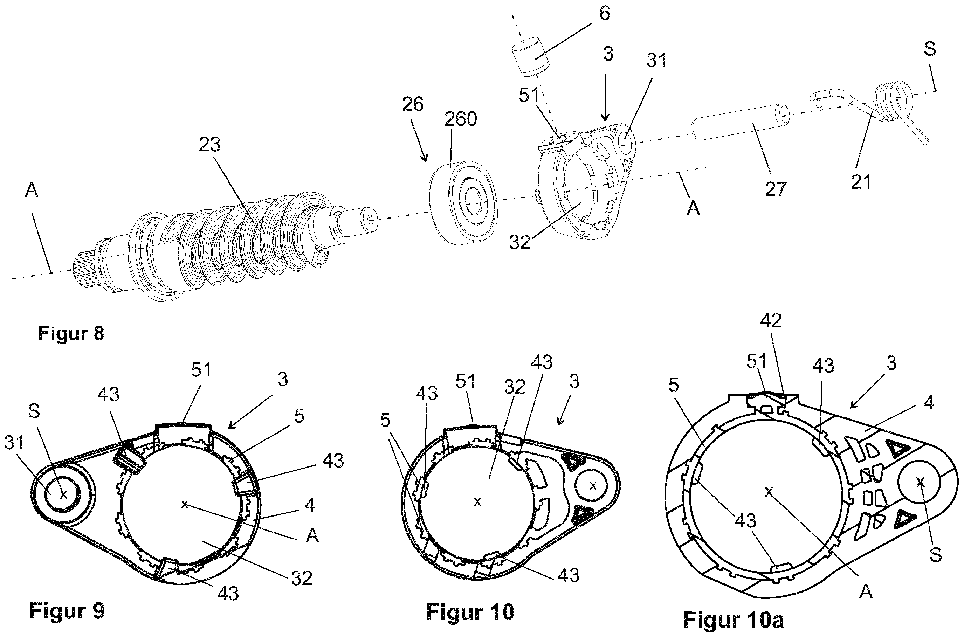

In einer in dem Kernelement 4 von der Antriebsachse A aus gesehen radial nach außen hin offenen Öffnung 42 ist ein Anschlagdämpfer 51 angeordnet, der als weiteres Kontaktelement ebenfalls aus dem vorgenannten Weichmaterial ausgebildet und ebenfalls im Zweikomponenten-Spritzguss mit dem Kernelement 4 verbunden ist. Wie in Figur 10a dargestellt, die einen Schnitt quer zur Antriebsachse A durch den Schwenkhebel 3 zeigt, fließt die Weichkomponente durch die Aussparungen im Bereich der Öffnung 42 und erstreckt sich weiter einstückig entlang der Innenumfangsfläche der Lageraufnahme 32 sowie bis ins Innere des Schwenklagers.

Der Anschlagdämpfer 51 steht kalottenförmig gewölbt von dem Schwenkhebel 3 nach außen vor, wie deutlich in dem in Figur 7 gezeigten Längsschnitt in Richtung der Antriebsachse A erkennbar ist.

Aus Figur 7 ist weiterhin entnehmbar, dass die Öffnung 42 in dem Kernelement 4 von außen bis in die Lageraufnahme 32 durchgeht, d.h. radial in die Innenwandung der Lageraufnahme-Öffnung einmündet. Dabei ist der Anschlagkörper 51 durch die Öffnung 42 hindurch einstückig mit dem Kontaktelement 5 an der Innenwand der Lageraufnahme 32 verbunden. Mit anderen Worten wird der Anschlagkörper 51 durch eine radial vorstehende, einstückige Ausformung des Kontaktelements 5 gebildet.

Zwischen dem Anschlagkörper 51 und dem Gehäuse 21 kann ein Vorspannelement 6 angeordnet sein. Dieses kann feder- oder gummielastisch ausgebildet sein und über den Anschlagdämpfer 51 eine gegen das Schneckenrad 22 gerichtete Vorspannkraft auf den Schwenkhebel 3 ausüben.

Figuren 9 und 10 zeigen axiale Ansichten des Schwenkhebels 3. Auf der in Figur 9 dem Betrachter zugewandten, bzw. der in Figur 10 abgewandten Stirnseite weist das Kernelement 4 von außen radial in die Lageraufnahme 32 vorstehende Positionierelemente 43 auf, gegen die das Lager 26 im montierten Zustand axial anliegt.

### Bezugszeichenliste

- 1: Lenkwelle
- 10: Eingangswelle
- 12: Ausgangswelle
- 100: Kraftfahrzeuglenkung
- 102: Lenkrad
- 103: Lenkgetriebe
- 104: Lenkritzel
- 106: Zahnstange
- 108: Spurstange
- 110: Rad
- 112: Hilfskraftunterstützung
- 114: Hilfskraftunterstützung
- 116: Hilfskraftunterstützung
- 118: Drehmomentsensor
- 118': Drehmomentsensor
- 119: Drehstab
- 120: Gelenk
- 2: Getriebe
- 21: Gehäuse
- 22: Schneckenrad
- 23: Schnecke
- 24: Motor
- 25: Lager
- 26: Lager
- 260: Lagerring
- 27: Achsbolzen
- 28: Federelement
- 3: Schwenkhebel
- 31: Lagerbohrung
- 32: Lageraufnahme
- 4: Kernelement
- 41: Stützelemente
- 42: Öffnung
- 43: Positionierelemente
- 5: Kontaktelement
- 51: Anschlagdämpfer
- 6: Vorspannelement
- A: Antriebsachse
- L: Längsachse
- S: Schwenkachse

## Patentansprüche

1. Elektromechanische Hilfskraftlenkung (100) für ein Kraftfahrzeug, umfassend eine um eine von einem elektrischen Motor (24) um eine Antriebsachse (A) drehend antreibbare Schnecke (23), die mit einem mit einer Lenkwelle (1) gekoppelten Schneckenrad (22) zusammenwirkt, und die um die Antriebsachse (A) drehbar in einem Lager (26) gelagert ist, das in einer relativ zum Schneckenrad (22) verlagerbaren Halterung (3) gehalten ist, wobei die Halterung (3) ein Kernelement (4) aus einem Kernmaterial aufweist, welches mit zumindest einem Kontaktelement (5) aus einem relativ zum Kernmaterial weicheren, elastisch leichter verformbaren Weichmaterial verbunden ist, und ein Kontaktelement (5) einen nach außen von der Halterung (3) vorstehenden Dämpfungskörper (51) ausbildet,
**dadurch gekennzeichnet, dass** das Lager (26) einen Lagerring (260) aufweist, der in der Halterung (3) in einer Lageraufnahme (32) angebracht ist, und ein in der Lageraufnahme (32) angeordnetes Kontaktelement (5) kontaktiert.

2. Hilfskraftlenkung nach Anspruch 1, **dadurch gekennzeichnet, dass** das Kernmaterial ein thermoplastisches Polymer (TP) und das Weichmaterial ein thermoplastisches Elastomer (TPE) ist.

3. Hilfskraftlenkung nach einem der vorangehenden Ansprüche, **dadurch gekennzeichnet, dass** die Halterung (3) als Zweikomponenten-Spritzgussteil ausgebildet ist, bei dem das Kernelement (4) und mindestens ein Kontaktelement (5) im Zweikomponenten-Kunststoffspritzguss verbunden sind.

4. Hilfskraftlenkung nach einem der vorangehenden Ansprüche, **dadurch gekennzeichnet, dass** die Lageraufnahme (32) mindestens ein mit dem Kernelement (4) einstückig ausgebildetes Stützelement (51) aufweist.

5. Hilfskraftlenkung nach einem der vorangehenden Ansprüche, **dadurch gekennzeichnet, dass** der Dämpfungskörper (51) in einer nach außen hin offenen Ausnehmung (42) des Kernelements (4) angebracht ist.

6. Hilfskraftlenkung nach Anspruch 5, **dadurch gekennzeichnet, dass** der Dämpfungskörper (51) aus der Ausnehmung (42) nach außen konvex gewölbt vorsteht.

7. Hilfskraftlenkung nach einem der Ansprüche 5 bis 6, **dadurch gekennzeichnet, dass** die Ausnehmung (42) bis in die Lageraufnahme (32) durchgeht, wobei ein Kontaktelement (5) der Lageraufnahme (32) und ein Dämpfungselement (51) durch die Ausnehmung (42) einstückig miteinander verbunden sind.

8. Hilfskraftlenkung nach einem der vorangehenden Ansprüche, **dadurch gekennzeichnet, dass** die Halterung als Schwenkhebel (3) ausgebildet ist, der um eine von der Antriebsachse (A) beabstandete Schwenkachse (S) relativ zum Schneckenrad (22) verschwenkbar ist.

9. Hilfskraftlenkung nach einem der vorangehenden Ansprüche, **dadurch gekennzeichnet, dass** die Halterung (3) von einem Federelement (28, 6) in Richtung auf das Schneckenrad (22) zu vorgespannt ist.

## Claims

1. Electromechanical power-assisted steering system (100) for a motor vehicle, comprising a worm (23) which can be driven in rotation about a drive axle (A) by an electric motor (24), cooperates with a worm wheel (22) coupled to a steering shaft (1), and is mounted rotatably about the drive axle (A) in a bearing (26) which is held in a mounting (3) which can be displaced relative to the worm wheel (22), wherein the mounting (3) has a core element (4) made of a core material which is connected to at least one contact element (5) made of a soft material which is softer relative to the core material and is elastically easier to deform, and a contact element (5) forms a damping body (51) projecting outwards from the mounting (3),
**characterized in that** the bearing (26) has a bearing ring (260) which is mounted in the mounting (3) in a bearing receptacle (32) and contacts a contact element (5) arranged in the bearing receptacle (32).

2. Power-assisted steering system according to claim 1, **characterized in that** the core material is a thermoplastic polymer (TP) and the soft material is a thermoplastic elastomer (TPE).

3. Power-assisted steering system according to one of the preceding claims, **characterized in that** the mounting (3) is designed as a two-component injection-moulded part, in which the core element (4) and at least one contact element (5) are connected by two-component plastic injection moulding.

4. Power-assisted steering system according to one of the preceding claims, **characterized in that** the bearing receptable (32) has at least one support element (51) formed integrally with the core element (4).

5. Power-assisted steering according to one of the preceding claims, **characterized in that** the damping body (51) is mounted in an outwardly open recess (42) of the core element (4).

6. Power-assisted steering according to claim 5, **characterized in that** the damping body (51) projects convexly outwards from the recess (42).

7. Power-assisted steering according to one of claims 5 to 6, **characterized in that** the recess (42) extends into the bearing seat (32), a contact element (5) of the bearing seat (32) and a damping element (51) being integrally connected to one another by the recess (42).

8. Power-assisted steering according to one of the preceding claims, **characterized in that** the mounting is designed as a pivot lever (3) which can be pivoted relative to the worm wheel (22) about a pivot axis (S) spaced from the drive axis (A).

9. Power-assisted steering according to one of the preceding claims, **characterized in that** the mounting (3) is pretensioned by a spring element (28, 6) in the direction of the worm wheel (22).

## Revendications

1. Direction assistée électromécanique (100) pour un véhicule automobile, comprenant une vis sans fin (23) pouvant être entraînée en rotation autour d'un axe d'entraînement (A) par un moteur électrique (24), qui coopère avec une roue à vis sans fin (22) couplée à un arbre de direction (1), et qui est montée de manière à pouvoir tourner autour de l'axe d'entraînement (A) dans un palier (26), qui est maintenu dans un support (3) déplaçable par rapport à la roue à vis sans fin (22), le support (3) présentant un élément de noyau (4) en un matériau de noyau, qui est relié à au moins un élément de contact (5) en un matériau mou plus mou par rapport au matériau de noyau, plus facilement déformable élastiquement, et un élément de contact (5) formant un corps d'amortissement (51) faisant saillie vers l'extérieur du support (3), **caractérisé en ce que** le palier (26) comprend une bague de palier (260) qui est montée dans le support (3) dans un logement de palier (32) et qui entre en contact avec un élément de contact (5) disposé dans le logement de palier (32).

2. Direction assistée selon la revendication 1, **caractérisée en ce que** le matériau du noyau est un polymère thermoplastique (TP) et le matériau souple est un élastomère thermoplastique (TPE).

3. Direction assistée selon l'une des revendications précédentes, **caractérisée en ce que** le support (3) est réalisé sous la forme d'une pièce moulée par injection à deux composants, dans laquelle l'élément central (4) et au moins un élément de contact (5) sont reliés par moulage par injection de matière plastique à deux composants.

4. Direction assistée selon l'une des revendications précédentes, **caractérisée en ce que** le logement de palier (32) comporte au moins un élément d'appui (51) réalisé d'un seul tenant avec l'élément central (4).

5. Direction assistée selon l'une des revendications précédentes, **caractérisée en ce que** le corps d'amortissement (51) est monté dans un évidement (42) de l'élément central (4) ouvert vers l'extérieur.

6. Direction assistée selon la revendication 5, **caractérisée en ce que** le corps d'amortissement (51) dépasse de l'évidement (42) en étant bombé de manière convexe vers l'extérieur.

7. Direction assistée selon l'une des revendications 5 à 6, **caractérisée en ce que** l'évidement (42) s'étend jusque dans le logement de palier (32), un élément de contact (5) du logement de palier (32) et un élément d'amortissement (51) étant reliés entre eux d'un seul tenant par l'évidement (42).

8. Direction assistée selon l'une des revendications précédentes, **caractérisée en ce que** le support est conçu comme un levier pivotant (3) qui peut pivoter par rapport à la roue à vis sans fin (22) autour d'un axe de pivotement (S) distant de l'axe d'entraînement (A).

9. Direction assistée selon l'une des revendications précédentes, **caractérisée en ce que** le support (3) est précontraint par un élément de ressort (28, 6) en direction de la roue à vis sans fin (22).
